# EUROPÄISCHE PATENTSCHRIFT

(11) **EP 2 702 854 B1**
(45) Veröffentlichungstag und Bekanntmachung des Hinweises auf die Patenterteilung: **17.07.2019**
(21) Anmeldenummer: 13162652.5
(22) Anmeldetag: 08.04.2013
(51) Int. Cl.: A01D 41/127

(54) **Selbstfahrende landwirtschaftliche Arbeitsmaschine**
Self-propelled agricultural machine
Machine agricole automobile

(30) Priorität: 03.07.2012 DE 102012105881
(43) Veröffentlichungstag der Anmeldung: 05.03.2014
(73) Patentinhaber: CLAAS Selbstfahrende Erntemaschinen GmbH, 33428 Harsewinkel (DE)
(72) Erfinder: Behnke, Willi, 33803 Steinhagen (DE)
(74) Vertreter: CLAAS Gruppe

(56) Entgegenhaltungen:
- EP-A1- 1 946 631
- EP-A1- 2 060 165
- DE-A1-102007 055 074
- US-A- 4 458 471

## Beschreibung

Die vorliegende Erfindung betrifft eine selbstfahrende landwirtschaftliche Arbeitsmaschine gemäß dem Oberbegriff des Anspruches 1.

Moderne selbstfahrende landwirtschaftliche Arbeitsmaschinen, insbesondere Mähdrescher oder Feldhäcksler, umfassen Steuer- und Regelungseinrichtungen, welche einen Betrieb der Arbeitsmaschine mit nahezu maximaler Auslastung der Arbeitsmaschine ermöglichen. Hierzu wird insbesondere eine hohe Motorauslastung angestrebt, der Betrieb der Arbeitsmaschine erfolgt nahe der Motorleistungsgrenze.

Die EP2060165A1 beschreibt eine selbstfahrende Erntemaschine, bei der die Arbeitsparameter in Abhängigkeit der Fahrgeschwindigkeit eingestellt werden.

Die DE 10 2007 055 074 A1 beschreibt eine gattungsgemäße selbstfahrende landwirtschaftliche Arbeitsmaschine. Die Arbeitsmaschine verfügt über einen Vorfahrtregler, der die Fahrgeschwindigkeit der Arbeitsmaschine selbsttätig regelt. Hierzu weist der Vorfahrtregler eine Steuer- und Regeleinheit auf, die über Sensoren die Arbeitsparameter der Arbeitsorgane sowie Betriebsparameter eines die Arbeitsmaschine antreibenden Verbrennungsmotors überwacht und mit die Qualität des Arbeitsprozesses repräsentierenden Parametern vergleicht. Die Fahrgeschwindigkeitsregelung der Arbeitsmaschine hängt sowohl von unterschiedlichen Erntegutparametern als auch von Arbeitsparametern der Arbeitsmaschine ab, welche die maximal erreichbare Auslastung der Arbeitsmaschine beeinflussen. Zur Steigerung der Auslastung kann die Fahrgeschwindigkeit bis zu einer maximal zulässigen Geschwindigkeit erhöht werden, welche die Fahrstabilität der Arbeitsmaschine gewährleistet. Wird trotz maximaler Fahrgeschwindigkeit die maximale Auslastung nicht erreicht, beispielsweise weil der Erntegutbestand stark schwankt, werden die Arbeitsparameter der Arbeitsorgane verändert, um die Auslastung der Arbeitsmaschine zu erhöhen. Nachteilig ist, dass die Gefahr einer Motorüberlastung zunimmt. Hierfür ursächlich können neben Bestandsschwankungen im Erntegut, Variationen der Enteguteigenschaften, wie feuchtes Lagergetreide, das Auftreten von stellenweise unreifem Erntegut, Grünbewuchs oder die Strohzähigkeit sein.

Eine durch Überlastung bedingte Motordrückung führt dazu, dass die Qualität der von den Arbeitsorganen erbrachten Ergebnisse ungünstig beeinflusst wird. So kann bei einem Mähdrescher der Reinigungsvorgang auf Grund eines Drehzahlabfalls des Motors zusammenbrechen, was zu hohen Reinigungsverlusten führt. Diese Beeinflussung ist nachhaltig, da auch bei sich erholender Drehzahl des Motors sich der Reinigungsvorgang nicht im gleichen zeitlichen Rahmen erholt. Ebenso steigt die Gefahr einer Verstopfung der Überkehr, was zu einer Verunreinigung des Erntegutes im Korntank des Mähdreschers führen würde. Der Drehzahlabfall kann sich auch negativ auf den Dreschvorgang auswirken. Zudem besteht die Gefahr, dass es zu einem Motorstillstand kommt, was zu einer Verstopfung eines oder mehrerer Arbeitsorgane führen kann, so dass ein Neustart der Arbeitsmaschine nicht ohne weiteres möglich ist.

Der Erfindung liegt daher die Aufgabe zu Grunde, eine selbstfahrende landwirtschaftliche Arbeitsmaschine der eingangs genanten Art derart weiterzubilden, dass bei auftretender Motordrückung die Qualität der Arbeitsprozesses weitgehend aufrechterhalten bleibt beziehungsweise mögliche Stillstandszeiten der Arbeitsmaschine durch eine Verstopfung von Arbeitsorganen vermieden oder zumindest reduziert werden.

Diese Aufgabe wird erfindungsgemäß durch die kennzeichnenden Merkmale des Anspruches 1 gelöst.

Vorteilhafte Ausgestaltungen und Weiterbildungen der landwirtschaftlichen Arbeitsmaschine sind Gegenstand der Unteransprüche.

Gemäß Anspruch 1 wird vorgeschlagen, dass die Steuer- und Regelungseinrichtung bei einsetzender Motordrückung zumindest einen Arbeitsparameter wenigstens eines Arbeitsorganes in Abhängigkeit von der Drehzahl des Verbrennungsmotors automatisch anpasst. Durch die automatische Anpassung wird einer auftretenden Motordrückung in der Weise begegnet, dass der negativen Beeinflussung der Qualität des Ernteprozesses entgegengewirkt wird. Der Eingriff durch die Steuer- und Regelungseinrichtung in der erfindungsgemäßen Weise führt dazu, dass sich eine Verschlechterung des Arbeitsergebnisses zumindest mindern beziehungsweise die Belastung des Verbrennungsmotors reduzieren sowie eine Verstopfung vermeiden oder deren Auswirkungen infolge eines Motorstillstandes unter Last zumindest minimieren lassen.

Dabei kann die Steuer- und Regelungseinrichtung zur Aufrechterhaltung der Qualität des Arbeitsprozesses die Drehzahl wenigstens eines Arbeitsorganes erhöhen.

Die Erhöhung der Drehzahl wenigstens eines Arbeitsorganes erfolgt zur Aufrechterhaltung der Qualität des Arbeitsprozesses des Arbeitsorganes und kann auch der Entlastung des Verbrennungsmotors dienen, wenn dadurch eine Verbesserung des Arbeitsprozesses des Arbeitsorganes erreicht wird, so dass sich dadurch eine Entlastung des Verbrennungsmotors einstellt.

Hierzu kann die Steuer- und Regelungseinrichtung die Drehzahl des wenigstens eines Arbeitsorganes erst bei Passieren einer ersten Drehzahlschwelle des Verbrennungsmotors anpassen. Diese Maßnahme dient dem Schutz der die Arbeitsorgane mit dem Verbrennungsmotor antriebstechnisch verbindenden Komponenten, wie beispielsweise einen Variator.

Insbesondere kann die Steuer- und Regelungseinrichtung bei Passieren einer zweiten Drehzahlschwelle des Verbrennungsmotors wenigstens ein Arbeitsorgan abschalten. Durch diese Maßnahme lässt sich eine schnelle Entlastung des Verbrennungsmotors erreichen. Zudem wird durch die Abschaltung wenigstens eines Arbeitsorganes auch die Gefahr einer Verstopfung gemindert. Vorzugsweise wird dasjenige Arbeitsorgan abgeschaltet, welches als Erstes mit dem Erntegut in Berührung kommt.

Unterstützt werden kann die Abschaltung wenigstens eines Arbeitsorganes dadurch, dass die Steuer- und Regelungseinrichtung ein aktives Bremsen des wenigstens einen abgeschalteten Arbeitsorganes einleitet. Hierdurch kann ein Nachlaufen des abgeschalteten Arbeitsorganes vermieden werden.

In bevorzugter Weiterbildung kann die Steuer- und Regelungseinrichtung die Drehzahl wenigstens eines Arbeitsorganes in Abhängigkeit von der Erntegutart und den damit verbundenen Erntebedingungen anpassen.

Vorteilhafterweise kann die Steuer- und Regelungseinrichtung mit einer Bedieneinrichtung in Verbindung stehen, durch die optisch und/oder akustisch eine Information über das Durchführen einer Maßnahme zur Anpassung eines Arbeitsparameters wenigstens eines Arbeitsorganes wiedergebbar ist. Auf diese Weise wird eine Bedienperson auf das Feststellen des Auftretens einer Motordrückung sowie die damit verbundenen, automatisch eingeleiteten Gegenmaßnahmen hingewiesen. Der Bediener kann sich weiterhin auf das Führen der Arbeitsmaschine konzentrieren.

Insbesondere kann die Arbeitsmaschine als ein Mähdrescher oder als ein Feldhäcksler ausgeführt sein.

Vorzugsweise kann das wenigstens eine Arbeitsorgan eine Korntankentleervorrichtung sein. Die Anpassung der Drehzahl mit der die Korntankentleervorrichtung angetrieben wird, im Speziellen die Reduzierung der Drehzahl bis hin zur Abschaltung der Korntankentleervorrichtung hat den Vorteil, dass damit ein durch eine hohe Leistungsaufnahme gekennzeichnetes Arbeitsorgan angepasst wird, wodurch eine schnelle Entlastung des Verbrennungsmotors beziehungsweise eine schnellere Beseitigung der durch die Motordrückung hervorgerufenen schlechteren Qualität der Arbeitsprozesse anderer Arbeitsorgane erreichbar ist. Die Unterbrechung des Abtankvorganges für eine kurze Zeitdauer hat zudem keine Auswirkungen auf die Qualität der anderen Arbeitsprozesse.

Des Weiteren kann das wenigstens eine Arbeitsorgan eine Abscheidevorrichtung der Arbeitsmaschine sein. Hierbei kann es sich um das tangential angeordnete Dreschwerk, einen axial angeordneten Dresch-Trennrotor sowie einen Hordenschüttler oder einen tangential angeordnetes Dreschwerk in Verbindung mit einem axial angeordneten Abscheiderotor.

Weiterhin kann es sich bei dem wenigstens einen Arbeitsorgan um eine Reinigungsvorrichtung der Arbeitsmaschine handeln.

Darüber hinaus kann das wenigstens eine Arbeitsorgan ein an der Arbeitsmaschine anbringbares Vorsatzgerät sein.

Weiterhin kann das wenigstens eine Arbeitsorgan ein Nachbeschleuniger des Feldhäcksler sein. Als Maßnahme zur Reduzierung der Auswirkungen einer Motordrückung bei einem Feldhäcksler kann die Rückwand des Nachbeschleunigers temporär auf einen größeren Abstand eingestellt werden, wodurch die Leistungsaufnahme des Nachbeschleunigers gesenkt wird. Die mit dieser Maßnahme einhergehende Reduzierung der Wurfweite beim Überladen sollte dem Bediener des Feldhäckslers signalisiert werden. Eine weitere Maßnahme ist die Anpassung des Crackerspaltes, dessen Öffnungsweite vorübergehend vergrößert wird, um dessen Leistungsaufnahme zu reduzieren. Die sich aus dieser Maßnahme ergebende Reduzierung der Verarbeitungsqualität des Erntegutes sollte dem Bediener ebenfalls signalisiert werden.

Die vorliegende Erfindung wird nachfolgend anhand eines in den Zeichnungen dargestellten Ausführungsbeispieles näher erläutert.

Es zeigen:
- Fig. 1: eine schematische Darstellung einer selbstfahrenden Arbeitsmaschine;
- Fig. 2: ein Flussdiagramm einer Drehzahlüberwachung eines Verbrennungsmotors der landwirtschaftlichen Arbeitsmaschine gemäß Fig.1.

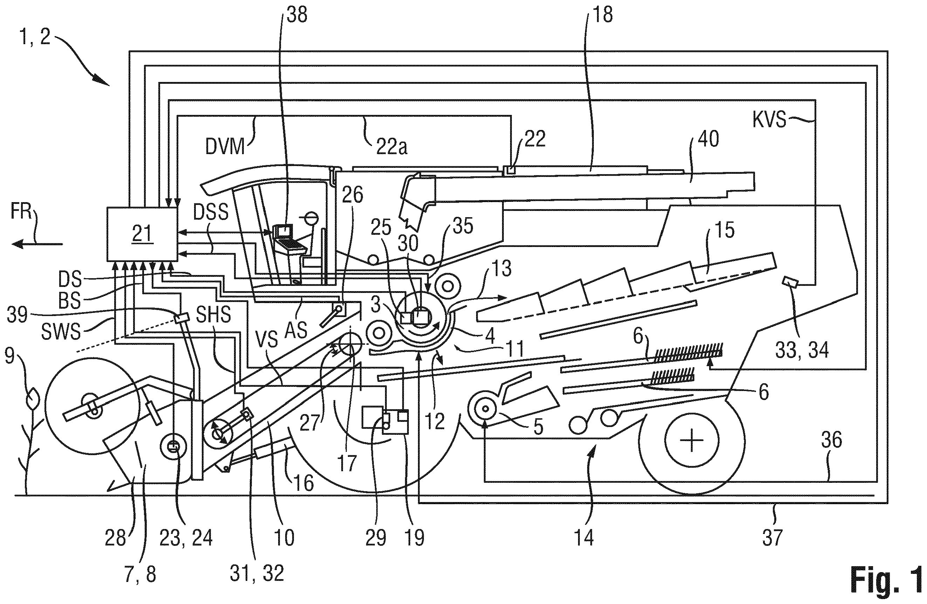

Die in Fig.1 dargestellte, als Mähdrescher 2 ausgeführte selbstfahrende landwirtschaftliche Arbeitsmaschine 1 nimmt frontseitig ein als Schneidwerk 7 ausgeführtes Vorsatzgerät 8 auf, welches das auf dem Feld gewachsene Erntegut 9 mäht und anschließend einem Schrägförderer 10 zuführt. Der Schrägförderer 10 übergibt das Erntegut 9 an ein nachgeschaltetes Dreschwerk 11, welches zumindest eine Dreschtrommel 3 sowie einen in seinem Abstand zur Dreschtrommel 3 verstellbaren Dreschkorb 4 aufweist. Das Dreschwerk bereitet das Erntegut 9 auf, wobei es in ein Korn-Spreu-Gemisch 12 und ein aus ausgedroschenen Halmen bestehenden Gutstrom 13 geteilt wird. Das Korn-Spreu-Gemisch 12 wird zu einer Reinigungseinrichtung 14, umfassend ein Reinigungsgebläse 5 sowie Siebe 6, gefördert, die die Körner von den Nichtkornbestandteilen, das heißt von Halm- und Spreuteilen trennt. Der aus ausgedroschenen Halmen bestehende Gutstrom 13 gelangt auf eine als Hordenschüttler 15 ausgebildete Abscheideeinrichtung, der den Gutstrom 13 in den rückwärtigen Bereich des Mähdreschers 1 fördert und dabei im Gutstrom 13 vorhandene Körner, Kurzstroh und Spreu abtrennt, die ebenfalls der Reinigungseinrichtung 14 zugeführt werden. Es liegt im Rahmen der Erfindung, dass die Abscheideeinrichtung auch als Axialrotor ausgebildet sein kann.

Der Schrägförderer 10 wird über Hubzylinder 16 die gehäuseseitig schwenkbeweglich am Mähdrescher 2 und kolbenstangenseitig schwenkbeweglich mit dem Schrägförderer 10 verbunden sind um eine sich quer zur Fahrtrichtung FR erstreckende Schwenkachse 17 verschwenkbar geführt. Der Mähdrescher 2 weist einen Verbrennungsmotor 18 auf, der einen Fahrantrieb 19 zum Antrieb der Vorderräder 20 des Mähdreschers 2, einen Dreschwerkantrieb zum Antrieb des Dreschwerks 11 und einen Schneidwerksantrieb zum Antrieb des Schneidwerks 7 antreibt.

Der Mähdrescher 2 ist mit einer Steuer- und Regelungseinrichtung 21 sowie einer Bedien- und Anzeigeeinheit 47 ausgestattet, die der Überwachung und Steuerung beziehungsweise Regelung der Arbeitsorgane des Mähdreschers 2 dient. Die Steuer- und Regelungseinrichtung 21 steht mit mehreren Sensoren 22, 23, 25, 26, 27, 29, 30, 32, 34, 39, in Verbindung, die am Mähdrescher 2 und am Schneidwerk 7 angeordnet sind, deren jeweilige Funktion nachfolgend erläutert wird.

Der Verbrennungsmotor 18 ist mit einem Sensor 22 versehen, der die von dem Verbrennungsmotor 18 zur Verfügung gestellte Drehzahl erfasst und ein mit dieser korrespondierendes Signal DVM generiert.

Am vorderen Ende des Schneidwerks 7 ist ein Bestandssensor 50 angeordnet, der den in Fahrtrichtung FR vor dem Mähdrescher 2 liegenden Erntegutbestand sensiert. Der Bestandsensor 50 generiert in Abhängigkeit vom Feldbewuchs Bestandssignale BS.

Ein weiterer Sensor 25 überwacht die Drehzahl des Dreschwerkes 11 und generiert ein mit der Drehzahl des Dreschwerkes 11 korrespondierendes Dreschwerksignal DS. Ein weiterer Sensor 23 überwacht einen Ein/Aus-Schalter 24 für das Schneidwerk 7 und generiert in Abhängigkeit vom Betriebsstatus des Schneidwerks 7 ein Schneidwerkssignal SWS.

Ein Drehwinkelsensor 26 ist in der Schwenkachse 17 des Schrägförderers 10 angeordnet und detektiert auf an sich bekannte Weise einen Verdrehwinkel 27 zwischen dem Schrägförderer 10 und dem Mähdrescher 2, Der Drehwinkelsensor 26 generiert bei einem bestimmten Verdrehwinkel 27, bei dem das Schneidwerk 7 eine Arbeitsposition 28 einnimmt, ein Arbeitspositionssignal AS.

Am Fahrantrieb 19 ist ein Drehzahlsensor 29 angeordnet, der auf an sich bekannte Weise die Fahrgeschwindigkeit und die Fahrtrichtung FR des Mähdreschers 2 detektiert. Der Drehzahlsensor 29 generiert proportional zur Fahrgeschwindigkeit bei Vorwärtsfahrt des Mähdreschers 2 ein Fahrgeschwindigkeitssignal VS.
Ein Durchsatzsensor 30 ist auf an sich bekannte Weise an dem Dreschwerkantrieb angeordnet und detektiert ein Dreschtrommeldrehmoment, das abhängig vom Erntegutdurchsatz durch das Dreschwerk 11 ist. Der Durchsatzsensor 30 generiert proportional zum Erntegutdurchsatz durch das Dreschwerk 7 ein Durchsatzsignal DSS.

Der Schrägförderer 10 weist eine an sich bekannte Schichthöhenerfassungseinrichtung 31 auf, die die Schichthöhe des Erntegutes im Schrägförderer 10 detektiert. Die Schichthöhenerfassungseinrichtung 31 weist einen Sensor 32 auf, der ein Schichthöhensignal SHS generieren, das proportional zur Schichthöhe ist.

Am Ende des Hordenschüttlers 15 ist eine Körnerstrommesseinrichtung 33 angeordnet, die einen Abscheideverlust im Gutstrom 13 sensiert. Die Körnerstrommesseinrichtung 33 weist mehrere Klopfsensoren 34 auf, die auf an sich bekannte Weise Kornverlustsignale KVS generieren, die proportional zum Abscheideverlust sind.

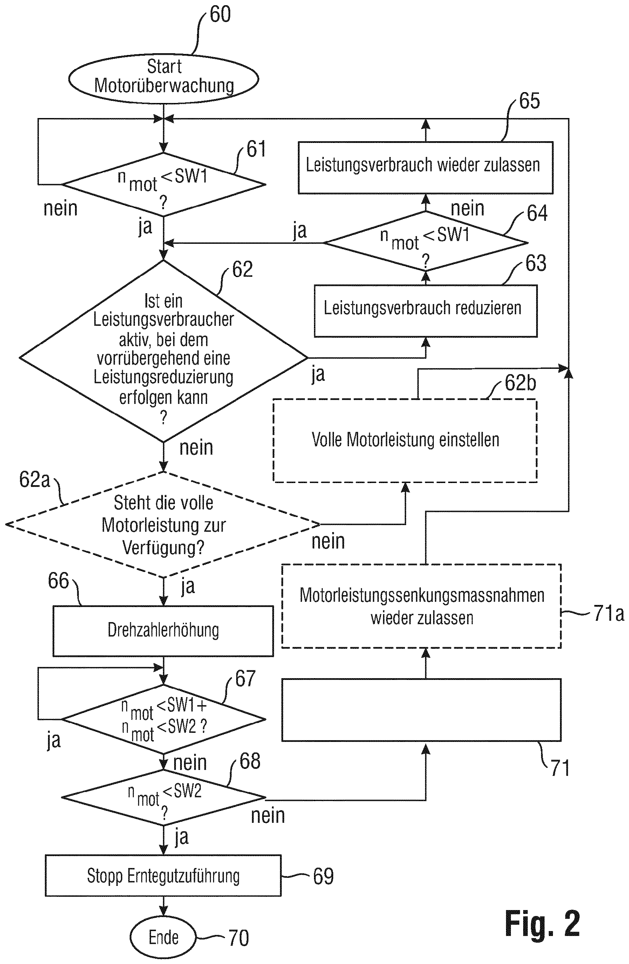

Die Darstellung in Fig. 2 zeigt ein Flussdiagramm, anhand dessen die Funktionsweise der Steuer- und Regeleinrichtung 21 im Zusammenspiel mit den verschiedenen Sensoren erläutert wird, wenn im Zuge einer Drehzahlüberwachung der Motordrehzahl nₘₒₜ des Verbrennungsmotors 18 eine Motordrückung detektiert wird. Die im Flussdiagramm gemäß Fig. 2 strichliniert dargestellten Verbindungslinien und Verfahrensschritte sind optionale Schritte, die zusätzlich vorgesehen sein können, um die Effizienz der Motorüberwachung zu erhöhen und die einzuleitenden Gegenmaßnahmen feiner abstufen zu können.

Mit dem Bezugszeichen 60 ist der Beginn der Überwachung der Motordrehzahl nₘₒₜ bezeichnet. Hierzu empfängt die Steuer- und Regeleinrichtung 21 von dem Drehzahlsensor 22 über eine Signalleitung 22a das mit der jeweiligen Motordrehzahl nₘₒₜ korrespondierende Signal DVM und wertet dieses aus. Die Arbeitsorgane des Mähdreschers werden in Abhängigkeit von der Erntgutart und den herrschenden Erntebedingungen mit hieran angepassten Betriebsparametern betrieben, deren Sollwerteinhaltung durch das jeweilige Arbeitsorgan von der Steuer- und Regeleinrichtung 21 überwacht wird

In einem Schritt 61 wird das die die Motordrehzahl nₘₒₜ repräsentierende Signal DVM mit einem in der Steuer- und Regeleinrichtung 21 hinterlegten ersten Schwellwert SW1 verglichen. Ist die Motordrehzahl nₘₒₜ größer als der erste Schwellwert SW1, wird die Überwachung der Motordrehzahl nₘₒₜ ohne das Ergreifen einer Maßnahme fortgesetzt. Unterschreitet hingegen die Motordrehzahl nₘₒₜ den ersten Schwellwert SW1, so wird in einem nachfolgenden Schritt 62 geprüft, ob ein Leistungsverbraucher aktiv ist, dessen Leistung vorübergehend reduziert werden kann. Wird in Schritt 62 festgestellt, dass einer oder mehrere Verbraucher aktiv sind, die vorübergehend abschaltbar sind, ohne den Arbeits- und Erntebetrieb nachhaltig zu beeinflussen, werden in einem Schritt 63 die festgestellten Verbraucher automatisch abgeschaltet. So kann beispielsweise im Schritt 63 zur Reduzierung des Leistungsverbrauchs der Abtankvorgang zur Entleerung des Korntankes unterbrochen werden. Des Weiteren können durch die Steuer- und Regeleinrichtung 21 auch Kleinverbraucher wie die Klimaanlage in der Kabine des Mähdreschers temporär abgeschaltet werden, um die Leistungsaufnahme zu reduzieren. Werden eine oder mehrere der zuvor genannten Maßnahmen ergriffen, so wird in einem Schritt 64 deren Erfolg durch den Vergleich der aktuellen Motordrehzahl nₘₒₜ mit dem Schwellwert SW1 überprüft. Überschreitet die Motordrehzahl nₘₒₜ den Schwellwert SW1 wieder, ist dies ein Signal dafür, dass die Motordrückung überwunden wurde, so dass der Betrieb der zuvor abgeschalteten Leistungsverbraucher wieder aufgenommen werden kann, was automatisch von der Steuer- und Regeleinrichtung 21 in einem Schritt 65 veranlassbar ist.

An den Schritt 62 kann sich optional ein Schritt 62a anschließen, in welchem die aktuell zur Verfügung stehende Motorleistung abgefragt wird. Bei der Feststellung, dass nicht die volle Motorleistung abgerufen wird, wird in einem optionalen Schritt 62b die volle Motorleistung durch eine Anhebung der Motordrehzahl abgerufen. Hierzu kann beispielsweise bei der als Mähdrescher 2 oder einer als Feldhäcksler ausgeführten Erntemaschine die Motordrehzahl auf den Maximalwert erhöht werden, wenn diese im originären Arbeits- und Erntebetrieb zwecks Verbrauchsreduzierung mit reduzierter Drehzahl betrieben werden. Eine weitere Option kann in der Unterbrechung des Regenerationsprozesses eines Partikelfiters bestehen, wenn dieser im Zeitpunkt der auftretenden Motordrückung aktiv ist.

Wird in Schritt 62 festgestellt, dass kein Leistungsverbraucher aktiv ist, dessen Abschaltung den Arbeits- und Erntebetrieb des Mähdreschers 2 nicht nachhaltig beeinflussen würde, und in dem optionalen Schritt 62a festgestellt, dass bereits die volle Motorleistung abgerufen wird, so wird in einem nachfolgenden Schritt 66 automatisch die Drehzahl eines Arbeitsorganes durch die Steuer- und Regelungseinrichtung 21 angepasst. Vorzugsweise wird die Drehzahl desjenigen Arbeitsorganes automatisch angepasst, welches einerseits eine unmittelbare Auswirkung auf den Arbeitsprozess des Mähdreschers 2 hat, und andererseits für eine vergleichsweise nur geringe Belastung des Verbrennungsmotors 18 sorgt. Vorrangig wird die Gebläsedrehzahl des Gebläses 5 durch ein Steuersignal 36 erhöht, welches von der Steuer- und Regeleinrichtung 21 generiert und an das Gebläse 5 gesandt wird. Die zusätzliche Belastung für den Verbrennungsmotor 18 durch die Erhöhung der Drehzahl des Gebläses 5 gegenüber einer Drehzahlerhöhung der anderen Arbeitsorgane, wie beispielsweise dem Vorsatzgerät 8 oder dem Dreschwerk 11, fällt signifikant geringer aus. Andererseits bewirkt eine Erhöhung der Gebläsedrehzahl auch eine Effizienzsteigerung der Reinigungseinrichtung 14, wodurch die Belastung der Reinigungseinrichtung 14 bei einer auftretenden Motordrückung reduziert wird. Insbesondere die Reinigungseinrichtung 14 reagiert anfällig auf Schwankungen der Motordrehzahl nₘₒₜ, was zu einem Zusammenbruch des Reinigungsprozesses der Reinigungsvorrichtung 14 führen kann.

Weiterhin kann in dem Schritt 66 die Änderung der Drehzahl des tangentialen Dreschwerkes 11 oder einer als axialer Abscheiderotor ausgeführten Abscheidevorrichtung sinnvoll sein und zu einer Entlastung des Verbrennungsmotors 18 führen, sofern durch diese Drehzahlanpassung eine Verbesserung des Gutflusses erreicht wird, was dann zu einer Entlastung des Verbrennungsmotors 18 führen kann. Die Drehzahlanpassung des Dreschwerkes 11 erfolgt über ein Steuersignal 37, welches von der Steuer- und Regeleinrichtung 21 generiert und an eine nicht näher dargestellte, das Dreschwerk 11 antreibende Antriebsvorrichtung gesandt wird. Die Entlastung des Verbrennungsmotors 18 resultiert aus einer durch die Drehzahlanpassung bedingten höheren Fördergeschwindigkeit des Erntegutes, wodurch eine Reduzierung der Schichtdicke der Erntegutschicht erreichbar ist. Das Eintreten dieses Effektes wird durch eine entsprechende Gutflussüberwachung in dem Mähdrescher 2 überwacht, um bei seinem Ausbleiben die Anpassung der Drehzahl des Dreschwerkes 11 zurückzunehmen.

Eine weitere Maßnahme gemäß dem Schritt 66 kann darin bestehen, die Anpassung der Drehzahl eines weiteren Arbeitsorganes in Abhängigkeit von der Erntegutart durchzuführen. Beispielsweise lässt sich die Drehzahl des Dreschwerkes 11 erhöhen, wenn das zu verarbeitende Erntegut einen Betrieb mit einer niedrigen Solldrehzahl des Dreschwerkes 11 voraussetzt, wie dies beispielsweise bei Raps, Soja oder Gras als Erntegut der Fall ist. Die Erhöhung der Drehzahl des Dreschwerkes 11 kann auf einen Wert erfolgen, der oberhalb des für das Erntegut und die vorliegenden Erntebedingungen spezifischen Sollwertes liegen.

In einem Schritt 67 wird die Motordrehzahl nₘₒₜ des Verbrennungsmotors 18 mit dem ersten Schwellwert SW1 und einem zweiten Schwellwert SW2, der kleiner ist als der erste Schwellwert SW1, verglichen. Liegt der aktuelle Wert für die Motordrehzahl nₘₒₜ zwischen dem ersten Schwellwert SW1 und dem zweiten Schwellwert SW2, werden die in den Schritten 62, 62a oder 66 ergriffenen Maßnahmen beibehalten und die Überwachung gemäß dem Schritt 67 fortgesetzt.

Liegt die aktuelle Motordrehzahl nₘₒₜ außerhalb des Bereiches, den die beiden Schwellwerte SW1 und SW2 bilden, wird in einem darauffolgenden Schritt 68 geprüft, ob die aktuelle Motordrehzahl nₘₒₜ den Schwellwert SW2 unterschritten hat. Liegt die aktuelle Motordrehzahl nₘₒₜ außerhalb des Bereiches und oberhalb des zweiten Schwellwertes, so ist dies das Indiz dafür, dass mit den ergriffenen Maßnahmen der Motordrückung erfolgreich begegnet werden konnte. Entsprechend wird in einem Schritt 71 die Anpassung der Drehzahl des Arbeitsorganes oder der Arbeitsorgane automatisch auf das Niveau zurückgeführt, welches vor dem Einleiten der Maßnahme zur Reduzierung der Motorlast gemäß dem Schritt 68 eingestellt worden ist. Weiterhin können gemäß einem optionalen Schritt 71a Motorleistungssenkungsmaßnahmen wieder zugelassen werden. So kann die Motordrehzahl nₘₒₜ wieder abgesenkt werden und/oder die Partikelfilterregeneration wieder zugelassen werden, sofern diese gemäß dem optionalen Schritt 62a verändert beziehungsweise abgeschaltet wurden.

Wird bei dem Vergleich der Motordrehzahl nₘₒₜ mit dem zweiten Schwellwert SW2 im Schritt 68 festgestellt, dass die aktuelle Motordrehzahl nₘₒₜ infolge der anhaltenden Motordrückung den zweiten Schwellwert SW2 unterschreitet, wird in einem nachfolgenden Schritt 69 automatisch eine Abschaltung und aktive Abbremsung eines Erntegut fördernden Arbeitsorganes, insbesondere des Schneidwerkes 7, veranlasst, um eine weitere Erntegutzufuhr in den Mähdrescher 2 zu verhindern. Hierzu wird von der Steuer- und Regelungseinrichtung 21 eine am Schneidwerk 7 vorgesehene Schnellstopvorrichtung aktiviert, die das Schneidwerk 7 in kürzester Zeit zum Stehen bringt. Hierdurch lässt sich ein Nachlaufen von Erntegut in das Innere des Mähdreschers 2 verhindern, um einen Neustart des Mähdreschers 2 ohne eine Verstopfung eines dem Schneidwerk 7 nachgeordneten Arbeitsorganes gewährleisten zu können. Mit der Abschaltung des das Erntegut fördernden Arbeitsorganes nach Schritt 69 endet im Schritt 70 die Motorüberwachung.

**Bezugszeichenliste**

| | | | |
|---|---|---|---|
| 1 | Arbeitsmaschine | 31 | Schichthöhenerfassungseinrichtung |
| 2 | Mähdrescher | 32 | Sensor |
| 3 | Dreschtrommel | 33 | Körnermesseinrichtung |
| 4 | Dreschkorb | 34 | Klopfsensor |
| 5 | Reinigungsgebläse | 35 | Steuersignal |
| 6 | Sieb | 36 | Steuersignal |
| 7 | Schneidwerk | 37 | Steuersignal |
| 8 | Vorsatzgerät | 38 | Bedien- und Anzeigeeinheit |
| 9 | Erntegut | 39 | Bestandssensor |
| 10 | Schrägförderer | 40 | Korntankentleervorrichtung |
| 11 | Dreschwerk | FR | Fahrrichtung |
| 12 | Korn-Spreu-Gemisch | BS | Bestandsignal |
| 13 | Gutstrom | DS | Dreschwerksignal |
| 14 | Reinigungseinrichtung | SWS | Schneidwerksignal |
| 15 | Hordenschüttler | AS | Arbeitspositionssignal |
| 16 | Hubzylinder | VS | Fahrgeschwindigkeitssignal |
| 17 | Schwenkachse | DSS | Durchsatzsignal |
| 18 | Verbrennungsmotor | SHS | Schichthöhesignal |
| 19 | Fahrantrieb | KVS | Kornverlustsignal |
| 20 | Vorderräder | DVM | Motordrehzahlsignal |
| 21 | Steuer- und Regelungseinrichtung | nₘₒₜ | Motordrehzahl |
| 22 | Drehzahlsensor | | |
| 22a | Signalleitung | 60 | Schritt |
| 23 | Sensor | 61 | Schritt |
| 24 | Ein/Aus-Schalter | 62 | Schritt |
| 25 | Sensor | 62a | Optionaler Schritt |
| 26 | Sensor | 62b | Optionaler Schritt |
| 27 | Verdrehwinkel | 63 | Schritt |
| 28 | Arbeitsposition | 64 | Schritt |
| 29 | Drehzahlsensor | 65 | Schritt |
| 30 | Durchsatzsensor | 66 | Schritt |
| | | 67 | Schritt |
| | | 68 | Schritt |
| | | 69 | Schritt |
| | | 70 | Schritt |
| | | 71 | Schritt |
| | | 71a | Optionaler Schritt |

## Patentansprüche

1. Selbstfahrende landwirtschaftliche Arbeitsmaschine (1) mit Arbeitsorganen (7, 11, 14) und einem diese antreibenden Verbrennungsmotor (18), deren Arbeitsparameter sowie Betriebsparameter einstellbar sind, sowie einer Steuer- und Regelungseinrichtung (21), welche die Arbeitsparameter sowie Betriebsparameter der Arbeitsorgane (7, 11, 14) und des Verbrennungsmotors (18) durch Sensoren (22, 23, 25, 26, 32, 34) überwacht und mit die Qualität des Arbeitsprozesses repräsentierenden Parametern vergleicht, **dadurch gekennzeichnet, dass** die Steuer- und Regelungseinrichtung (21) dazu ausgestattet ist, dass sie bei einsetzender Motordrückung zumindest einen Arbeitsparameter wenigstens eines Arbeitsorganes (7, 11, 14) in Abhängigkeit von der Drehzahl (nₘₒₜ) des Verbrennungsmotors (18) in der Weise automatisch anpasst, dass
- ein Verbraucher leistungsreduziert betrieben oder abgeschaltet wird (62) und wenn dies nicht möglich ist,
- zur Aufrechterhaltung der Qualität des Arbeitsprozesses die Drehzahl wenigstens eines Arbeitsorgangs (7, 11, 14) erhöht wird.

2. Selbstfahrende landwirtschaftliche Arbeitsmaschine (1) nach Anspruch 1,
**dadurch gekennzeichnet, dass** die Steuer- und Regelungseinrichtung (21) dazu ausgestattet ist, dass sie, wenn kein Verbraucher leistungsreduziert betrieben oder abgeschaltet werden kann, die Motordrehzahl erhöht, sofern nicht die maximale Motorleistung bereits erreicht ist..

3. Selbstfahrende landwirtschaftliche Arbeitsmaschine (1) nach einem der Ansprüche 1 oder 2, **dadurch gekennzeichnet, dass** die Steuer- und Regelungseinrichtung (21) dazu ausgestattet ist, dass sie die Drehzahl des wenigstens eines Arbeitsorganes erst bei Passieren einer ersten Drehzahlschwelle (SW1) des Verbrennungsmotors (18) anpasst.

4. Selbstfahrende landwirtschaftliche Arbeitsmaschine (1) nach einem der Ansprüche 1 bis 3, **dadurch gekennzeichnet, dass** die Steuer- und Regelungseinrichtung (21) dazu ausgestattet ist, dass sie bei Passieren einer zweiten Drehzahlschwelle (SW2) des Verbrennungsmotors (18) wenigstens ein Arbeitsorgan (7, 11, 14) abschaltet.

5. Selbstfahrende landwirtschaftliche Arbeitsmaschine (1) nach Anspruch 4, **dadurch gekennzeichnet, dass** die Steuer- und Regelungseinrichtung (21) dazu ausgestattet ist, dass sie ein aktives Bremsen des wenigstens einen abgeschalteten Arbeitsorganes (7, 11, 14) einleitet.

6. Selbstfahrende landwirtschaftliche Arbeitsmaschine (1) nach einem der Ansprüche 1 bis 5, **dadurch gekennzeichnet, dass** die Steuer- und Regelungseinrichtung (21) dazu ausgestattet ist, dass sie die Drehzahl wenigstens eines Arbeitsorganes (7, 11, 14) in Abhängigkeit von der Erntegutart anpasst.

7. Selbstfahrende landwirtschaftliche Arbeitsmaschine (1) nach einem der Ansprüche 1 bis 5, **dadurch gekennzeichnet, dass** die Steuer- und Regelungseinrichtung (21) dazu ausgestattet ist, dass sie mit einer Bedieneinrichtung (38) in Verbindung steht, durch die optisch und/oder akustisch eine Information über das Durchführen einer Maßnahme zur Anpassung eines Arbeitsparameters wenigstens eines Arbeitsorganes (7, 11, 14) wiedergebbar ist.

8. Selbstfahrende landwirtschaftliche Arbeitsmaschine (1) nach einem der Ansprüche 1 bis 7, **dadurch gekennzeichnet, dass** die Arbeitsmaschine (1) als ein Mähdrescher (2) ausgeführt ist.

9. Selbstfahrende landwirtschaftliche Arbeitsmaschine (1) nach einem der Ansprüche 1 bis 7, **dadurch gekennzeichnet, dass** die Arbeitsmaschine als ein Feldhäcksler ausgeführt ist.

10. Selbstfahrende landwirtschaftliche Arbeitsmaschine nach Anspruch 8, **dadurch gekennzeichnet, dass** das wenigstens eine Arbeitsorgan eine Korntankentleervorrichtung (40) ist.

11. Selbstfahrende landwirtschaftliche Arbeitsmaschine (1) nach Anspruch 8, **dadurch gekennzeichnet, dass** das wenigstens eine Arbeitsorgan eine Abscheidevorrichtung (11) der Arbeitsmaschine (1) ist.

12. Selbstfahrende landwirtschaftliche Arbeitsmaschine (1) nach Anspruch 8, **dadurch gekennzeichnet, dass** das wenigstens eine Arbeitsorgan eine Reinigungsvorrichtung (14) der Arbeitsmaschine (1) ist.

13. Selbstfahrende landwirtschaftliche Arbeitsmaschine (1) nach einem der Ansprüche 8 oder 9, **dadurch gekennzeichnet, dass** das wenigstens eine Arbeitsorgan ein an der Arbeitsmaschine anbringbares Vorsatzgerät (7) ist.

14. Selbstfahrende landwirtschaftliche Arbeitsmaschine nach Anspruch 9, **dadurch gekennzeichnet, dass** das wenigstens eine Arbeitsorgan ein Nachbeschleuniger ist.

## Claims

1. A self-propelled agricultural working machine (1) with working units (7, 11, 14) and a combustion engine (18) which drives them, for which the working parameters as well as operational parameters can be adjusted, as well as a controlling and regulating device (21) which monitors the working parameters as well as the operational parameters of the working units (7, 11, 14) and of the combustion engine (18) by means of sensors (22, 23, 25, 26, 32, 34) and compares them with parameters representing the quality of the working process, **characterized in that** the controlling and regulating device (21) is designed in a manner such that as engine overloading begins, at least one working parameter of at least one working unit (7, 11, 14) is automatically adjusted as a function of the rotational speed (nₘₒₜ) of the combustion engine (18) in a manner such that
- a consumer is operated at reduced power or is switched off (62), and if this is not possible,
- in order to maintain the quality of the working process, the rotational speed of at least one working unit (7, 11, 14) is increased.

2. The self-propelled agricultural working machine (1) as claimed in claim 1, **characterized in that** the controlling and regulating device (21) is designed in a manner such that if no consumer can be operated under reduced power or switched off, the engine rotational speed is increased, as long as the maximum engine power has not already been reached.

3. The self-propelled agricultural working machine (1) as claimed in claim 1 or claim 2, **characterized in that** the controlling and regulating device (21) is designed in a manner such that it adjusts the rotational speed of the at least one working unit only when a first rotational speed threshold (SW1) of the combustion engine (18) is exceeded.

4. The self-propelled agricultural working machine (1) as claimed in one of claims 1 to 3, **characterized in that** the controlling and regulating device (21) is designed in a manner such that when a second rotational speed threshold (SW2) of the combustion engine (18) is exceeded, it switches off at least one working unit (7, 11, 14).

5. The self-propelled agricultural working machine (1) as claimed in claim 4, **characterized in that** the controlling and regulating device (21) is designed in a manner such that it introduces active braking of the at least one working unit (7, 11, 14) which has been switched off.

6. The self-propelled agricultural working machine (1) as claimed in one of claims 1 to 5, **characterized in that** the controlling and regulating device (21) is designed in a manner such that it adjusts the rotational speed of at least one working unit (7, 11, 14) as a function of the type of crop.

7. The self-propelled agricultural working machine (1) as claimed in one of claims 1 to 5, **characterized in that** the controlling and regulating device (21) is designed in a manner such that it is connected to an operating device (38) by means of which information regarding execution of a measure for adjusting a working parameter of at least one working unit (7, 11, 14) can be displayed optically and/or acoustically.

8. The self-propelled agricultural working machine (1) as claimed in one of claims 1 to 7, **characterized in that** the working machine (1) is configured as a combine harvester (2).

9. The self-propelled agricultural working machine (1) as claimed in one of claims 1 to 7, **characterized in that** the working machine (1) is configured as a forage harvester.

10. The self-propelled agricultural working machine (1) as claimed in claim 8, **characterized in that** the at least one working unit is a grain tank emptying device (40).

11. The self-propelled agricultural working machine (1) as claimed in claim 8, **characterized in that** the at least one working unit is a separating device (11) of the working machine (1).

12. The self-propelled agricultural working machine (1) as claimed in claim 8, **characterized in that** the at least one working unit is a cleaning device (14) of the working machine (1).

13. The self-propelled agricultural working machine (1) as claimed in claim 8 or claim 9, **characterized in that** the at least one working unit is a front attachment (7) which can be attached to the working machine.

14. The self-propelled agricultural working machine (1) as claimed in claim 9, **characterized in that** the at least one working unit is a post-accelerator.

## Revendications

1. Machine de travail agricole automotrice (1) comprenant des organes de travail (7, 11, 14) et comprenant un moteur à combustion interne (18) qui les entraîne et dont les paramètres de travail ainsi que les paramètres d'exploitation sont réglables, ainsi que comprenant un équipement de commande et de régulation (21) qui surveille les paramètres de travail ainsi que les paramètres d'exploitation des organes de travail (7, 11, 14) et du moteur à combustion interne (18) par l'intermédiaire de capteurs (22, 23, 25, 26, 32, 34) et les compare à des paramètres représentant la qualité du processus de travail, **caractérisée en ce que** l'équipement de commande et de régulation (21) est équipé pour, au début de la mise en pression du moteur, adapter automatiquement au moins un paramètre de travail au moins d'un organe de travail (7, 11, 14) en fonction de la vitesse de rotation (nₘₒₜ) du moteur à combustion interne (18), de façon que :
- un organe utilisateur soit exploité à puissance réduite ou coupé (62) et, si ce n'est pas possible,
- la vitesse de rotation d'au moins un organe de travail (7, 11, 14) soit augmentée pour maintenant la qualité du processus de travail.

2. Machine de travail agricole automotrice (1) selon la revendication 1, **caractérisée en ce que** l'équipement de commande et de régulation (21) est équipé de façon à augmenter la vitesse de rotation du moteur lorsqu'aucun organe utilisateur ne peut être exploité à puissance réduite ou coupé si la puissance maximale de moteur n'est pas déjà atteinte.

3. Machine de travail agricole automotrice (1) selon une des revendications 1 ou 2, **caractérisée en ce que** l'équipement de commande et de régulation (21) est équipé de façon à n'adapter la vitesse de rotation du au moins un organe de travail qu'en cas de franchissement d'un premier seuil de vitesse de rotation (SW1) du moteur à combustion interne (18).

4. Machine de travail agricole automotrice (1) selon une des revendications 1 à 3, **caractérisée en ce que** l'équipement de commande et de régulation (21) est équipé de façon à couper au moins un organe de travail (7, 11, 14) en cas de franchissement d'un second seuil de vitesse de rotation (SW2) d'un moteur à combustion interne (18).

5. Machine de travail agricole automotrice (1) selon la revendication 4, **caractérisée en ce que** l'équipement de commande et de régulation (21) est équipé de façon à induire un freinage actif du au moins un organe de travail coupé (7, 11, 14).

6. Machine de travail agricole automotrice (1) selon une des revendications 1 à 5, **caractérisée en ce que** l'équipement de commande et de régulation (21) est équipé de façon à adapter la vitesse de rotation au moins d'un organe de travail (7, 11, 14) en fonction du type de produit récolté.

7. Machine de travail agricole automotrice (1) selon une des revendications précédentes 1 à 5, **caractérisée en ce que** l'équipement de commande et de régulation (21) est équipé de façon à être relié à un équipement de manoeuvre (38) par l'intermédiaire duquel une information sur l'exécution d'une mesure pour adapter un paramètre de travail d'au moins un organe de travail (7, 11, 14) est restituable optiquement et/ou acoustiquement.

8. Machine de travail agricole automotrice (1) selon une des revendications 1 à 7, **caractérisée en ce que** la machine de travail (1) est conformée en moissonneuse-batteuse (2).

9. Machine de travail agricole automotrice (1) selon une des revendications 1 à 7, **caractérisée en ce que** la machine de travail est conformée en ensileuse.

10. Machine de travail agricole automotrice selon la revendication 8, **caractérisée en ce que** le au moins un organe de travail est un dispositif de vidange de trémie à grain (40).

11. Machine de travail agricole automotrice (1) selon la revendication 8, **caractérisée en ce que** le au moins un organe de travail est un dispositif séparateur (11) de la machine de travail (1).

12. Machine de travail agricole automotrice (1) selon la revendication 8, **caractérisée en ce que** le au moins un organe de travail est un dispositif de nettoyage (14) de la machine de travail (1).

13. Machine de travail agricole automotrice (1) selon une des revendications 8 ou 9, **caractérisée en ce qu'**au moins un organe de travail est un outil frontal (7) montable sur la machine de travail.

14. Machine de travail agricole automotrice selon la revendication 9, **caractérisée en ce que** le au moins un organe de travail est un distributeur-accélérateur.
